# EUROPÄISCHE PATENTSCHRIFT

(11) **EP 3 749 547 B1**
(45) Veröffentlichungstag und Bekanntmachung des Hinweises auf die Patenterteilung: **17.11.2021**
(21) Anmeldenummer: 19713677.3
(22) Anmeldetag: 09.02.2019
(51) Int. Cl.: B60P 1/02

(54) **SYSTEM ZUM TRAGEN, AUFNEHMEN UND ENTLADEN VON LASTEN UND GÜTERN FÜR ELEKTRISCHE KRAFTFAHRZEUGE UND HYBRIDFAHRZEUGE**
SYSTEM FOR CARRYING, RECEIVING, AND UNLOADING LOADS AND GOODS FOR ELECTRIC MOTOR VEHICLES AND HYBRID VEHICLES
SYSTÈME POUR PORTER, ACCUEILLIR ET DÉCHARGER DES CHARGES ET DES MARCHANDISES POUR VÉHICULES AUTOMOBILES ÉLECTRIQUES ET VÉHICULES HYBRIDES

(30) Priorität: 10.02.2018 DE 202018000689 U
(43) Veröffentlichungstag der Anmeldung: 16.12.2020
(73) Patentinhaber: Zeuner, Stefan, 1307 Dresden (DE)
(72) Erfinder: Zeuner, Stefan, 1307 Dresden (DE)
(86) Internationale Anmeldenummer: PCT/DE2019/000032
(87) Internationale Veröffentlichungsnummer: WO 2019/154451

(56) Entgegenhaltungen:
- DE-A1-102010 056 383
- DE-A1-102012 004 821
- DE-A1-102012 018 219
- DE-U1-202007 014 687
- DE-U1-202013 007 609
- DE-U1-202013 100 573

## Beschreibung

Die vorliegende Erfindung betrifft ein System zum Tragen, Aufnehmen und Entladen von Lasten und Gütern für elektrisch betriebene Kraftfahrzeuge und Hybridfahrzeuge. Desweiteren betrifft die Erfindung ein Fahrzeug, in dem das System verbaut ist.

Zum Transport und die Aufnahme von Gütern in und an Kraftfahrzeugen existieren eine Vielzahl verschiedener Lösungen, die oftmals für ein spezielles Transportgut optimiert sind, typischerweise durch den Ort der Unterbringung unterschieden werden und für Kfz mit verbrennungsmotorischem Antrieb entwickelt wurden. Außerdem ist der Großteil der Lösungen an das schon fertige Kfz angepaßt worden, muß also konstruktive Kompromisse eingehen.

Bekannt sind eine Vielzahl an Trägersystemen, die an der Außenseite des Kfz befestigt werden, vorrangig auf dem Dach oder am Heck, bspw. für Fahrräder (DE 202016104011U1) oder Dachboxen, diese in den letzten Jahren auch zunehmend teiloptimiert wie bspw. mittels eines faltbaren, optimal integrierten Dachgepäckträgers (DE102017201527A1).

Bekannt sind desweiteren Trägersysteme für Fahrräder für den Innenraum (DE102013212669A1, DE202016006976U1). Die DE 10 2012 018219 A1 offenbart ein Fahrzeug gemäß dem Oberbegriff vom Anspruch 1.

Neben den erwähnten sind Lösungen zum Transport von Gütern an der Fahrzeugunterseite bekannt, diese sind teilintegrierte Lösungen für den Heckbereich von Kfz wie z.B. Schubkästen (DE102012018219A1, DE102012004821A1, DE102013012126A1) oder eher für den Campingbereich (DE202013100573U1, AU2012227161B2).

Bekannt sind Schienensysteme für eine Vielzahl von Anwendungsfällen für Kfz, vorrangig jedoch für den Innenraum und hier zur Befestigung von 'Mobiliar' (DE102015224098A1).

Bekannt sind faltbare Behältnisse im Bereich des Transports von Gütern als Faltbox zur Befestigung in oder an Kfz (DE102005049340A1) und als vertikal faltbare Lkw-Anhänger (WO2016/048472), letztere mittels einer Scherengitterkonstruktion realisiert.

Bekannt sind zum Transport temperatursensibler Güter Lösungen, die eine Temperierung ermöglichen bzw. einen Stromanschluss beinhalten (DE102009012404A1).

Die Lösungen für den Außenbereich sind charakterisiert durch Nachteile wie mangelnde Ergonomie, schlechte Aerodynamik, Verschmutzungsneigung und wenig wirksamen Diebstahlschutz, auch wenn durch Teiloptimierung Verbesserungen erzielt werden. Speziell der erste Punkt gewinnt vor dem Hintergrund demographischer Veränderungen stark an Gewicht. Weiterhin ist trotz des vorhandenen Gewöhnungseffekts kein ästhetischer Gewinn zu verbuchen.

Trägersysteme für den Innenraum sind oftmals aufwendig zu montieren und erfordern bspw. im Fall von Fahrrädern meist eine Teildemontage. Zudem kann der Fahrzeuginnenraum durch Verschmutzung und Geruchsbelästigung beeinträchtigt werden.

Die Trägersysteme sind nach Gebrauch meist nicht falt- oder zusammenklappbar, so daß bei Nichtnutzung Lagerraum vorgehalten werden muss.

Anwendungen für den Bereich Stadtlogistik haben oftmals strukturelle Nachteile, wie bspw. eine Drop-Off-Anwendung für den Kofferraum, die den -wenn auch nur einmaligen-Zugang zum privaten Bereich des Kfz unumgänglich macht, den anwendungsfallspezifischen Umbau des Fahrzeugs oder die fehlende Automatisierbarkeit der Be- und Entladung.

Transportlösungen für den Unterboden des Fahrzeugs sind bislang auf kleinere Boxen beschränkt, da bei Verbrennungsmotoren die Abgasanlage größere Lösungen nicht erlaubt. Mit der Konzeption von Fahrzeugen für den Elektroantrieb ist diese Beschränkung nicht mehr begründet.

Fast allen bekannten Lösungen gemein ist zudem die Tatsache, daß durch Einbau bzw. Montage derartiger Systeme ein 'Sharen' des Fahrzeugs in der Praxis deutlich erschwert wird bzw. die anwendungsfallabhängigen Lösungen für jeden einzelnen Nutzungsfall gesondert bereitgestellt und montiert werden müßten.

Den eingangs beschriebenen Systemen nach dem Stand der Technik ist generell gemein, daß sie jeweils an der Optimierung der Lösung eines spezifischen Transportproblems im gegebenen Kontext - d.h. eine bekannte Anordungs-Konfiguration eines verbrennungsmotorisch angetriebenen Kfz - arbeiten und damit oftmals ein Konflikt wichtiger Zielgrößen entsteht.

Aufgabe der Erfindung ist es, ein Transportsystem für ein Kraftfahrzeug bereitzustellen, das durch spezifische Auswahl und Gestaltung der Teilkomponenten und ihrem spezifischen, engen Zusammenwirken eine maximale Vielseitigkeit der Nutzbarkeit und schnellste Anpassung an unterschiedliche Anwendungsfälle mit hervorragender Ergonomie der Be- und Entladung paart und dabei gleichzeitig Nachteile existierender Lösungen vermeidet, wie z.B. Verschmutzung, mangelnden Diebstahlschutz, schlechte Aerodynamik, Sperrigkeit bei Nichtnutzung.

Die gestellte Aufgabe wird durch ein Fahrzeug mit den Merkmalen vom Anspruch 1 gelöst.

Die spezifische Hinterachskonstruktion ist hierbei als konstruktive Voraussetzung zu sehen, durch die der große auffaltbare Laderaum zwischen den beiden Längslenkern überhaupt 'aufgespannt' werden kann.

Die Anbindung der genannten technischen Subsysteme an das fahrzeugeigene Bussystem gewährleistet, daß deren Steuerung und Funktionserfüllung sowohl nahtlos integriert als auch koordiniert gewährleistet werden kann. So wird bspw. die Funktion und Regelgeschwindigkeit des Stellmotors für das Scherengitter direkt mit der von der ECU des Niveauregelsystems bereitgestellten Ist-Höhe des Fahrzeugs abgestimmt und eine Entriegelung des Schienensystems zur Beladung erst dann autorisiert, wenn sowohl Niveauregelsystem als auch der Stellmotor den Abschluss der zu regelnden Entfaltung des Laderaums signalisieren. Analog wird sichergestellt, daß ein Einfalten des Laderaums nur bei nicht belegtem Schienensystem erfolgen kann und ein Absenken des Fahrzeugs parallel nur in maximal der Regelgeschwindigkeit des Stellmotors des Faltmechanismus.

Die Vorteile des erfindungsgemäßen Fahrzeugs sind neben der maximal ergonomischen Positionierung des Laderaums und der sicheren und vor Verschmutzung geschützten Unterbringung des Ladeguts vor allem die nutzungsfallabhängige Anpaßbarkeit des Systems in Bezug auf Bedienung -unterschiedliche maximale Hubhöhen, frei definierbare 'Hubraster' und Regelgeschwindigkeiten- und zu transportierende Güter und die intuitive, spielerisch leichte Bedienbarkeit. Durch die konstruktionsbedingt maximale Offenheit kann das System mittels in das Schienensystem einzusetzender anwendungsspezifischer Subsysteme eine Vielzahl verschiedenster Nutzungsszenarien bedienen und dies in kürzestmöglicher Umbauzeit. Ein Laderaum mit einem derart breiten Nutzungsspektrum, der auf Knopfdruck immer verfügbar, aber bei Nichtnutzung quasi 'unsichtbar' ist, ist bis dato nicht bekannt. Außerdem bietet das System den großen Vorteil, daß es bei den verbauten Fahrzeugen sowohl bei rein privater, rein gewerblicher als auch Misch-Nutzung ohne Umbaumaßnahmen etliche 'Use-Cases' bietet, eine gewerbliche Nachnutzung eines privaten Fahrzeugs ist ebenso denkbar wie ein hocheffizienter Einsatz als Carsharing-Fahrzeug mit wechselnden Aufgabenprofilen.

Schließlich ist diese integrierte Lösung sowohl in Bezug auf optische als auch aerodynamische Optimierung hervorragend, bei beiden Aspekten sowohl im aufgefalteten als auch im geschlossenen Zustand.

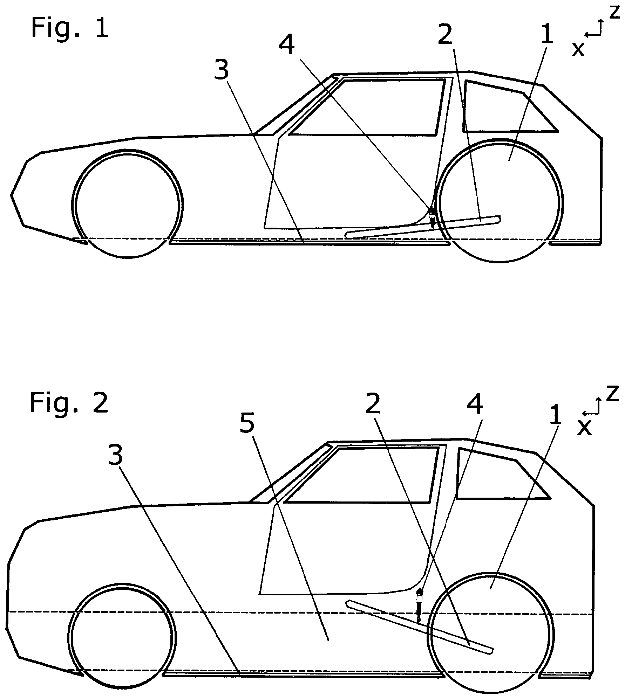

In Fig.1 und Fig. 2 wird schematisch die seitliche Außenansicht eines erfindungsgemäße Fahrzeugs dargestellt, wobei der Bereich des aufgefalteten Laderaums (5), die Positionierung der Feder-Dämpfer-Einheit (4), die grobe Stellung des Längslenkers der Hinterachse (2) mit dem Hinterrad (1) und die den Laderaum nach unten abschließende Unterschale (3) erkennbar ist.

In einer bevorzugten Ausführung des erfindungsgemäßen Fahrzeugs wird zum Einen der potentielle Bauraum zwischen den hinteren Rädern (1) des betreffenden Fahrzeugs durch eine entsprechende Längslenkerkonstruktion der Hinterachse geschaffen. Diese ist im Vergleich zu bekannten Ausführungen mit längeren Längslenkern (2) ausgestattet, um eine ausreichende Hubhöhe zu erreichen. Der Längslenker (2) wird aufgrund der besonders starken Belastungen entweder aus hochfestem Stahl, einem carbonfaserverstärkten Kunststoff oder einer Multimaterialkombination gefertigt werden.

Desweiteren wird der auffaltbare Laderaum (5) in dem Raum zwischen den Längslenkern (2) dergestalt konstruktiv realisiert, daß ein Scherengitterhubsystem verwendet wird.

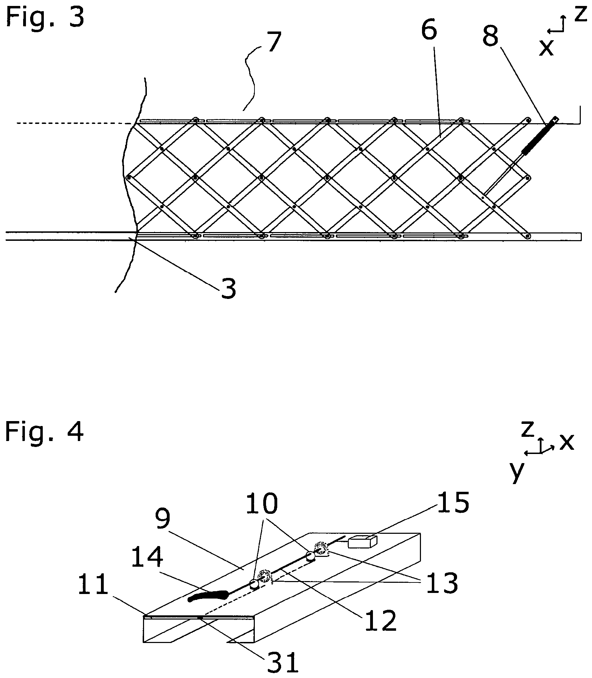

Das Scherengitterhubsystem besteht wie aus Fig. 3 ersichtlich aus dem Scherengitter (6), das fest seitlich am Fahrzeugunterboden (7) befestigt ist, dem Stellmotor (8) für das Scherengitter und als unterem Abschluss der Unterschale (3). Durch Betätigung des mit dem fahrzeugeigenen Bussystem (21) verbundenen Stellmotors (8) wird das Scherengitter (6) auf- bzw. eingefaltet.

Sowohl das Scherengitter (6) als auch die Unterschale (3) werden vorzugsweise mit Verbundwerkstoffen wie faserverstärkten Kunststoffen realisiert, um leicht und platzsparend zu konstruieren. Diese den Laderaum (5) bildende 'Umkonstruktion' kann besonders leicht konstruiert werden, da die zu tragenden schweren Lasten über das Schienensystem getragen werden.

Das Schienensystem wird gebildet durch mindestens eine, in der in Fig.4 und Folgenden angeführten bevorzugten Ausführungsvariante durch vier Profilschienen (9), die in den Fahrzeugunterboden (7) konstruktiv eingelassen sind und ein Verriegelungssystem, das sowohl elektromechanisch als auch manuell bedienbar ist und an das fahrzeugeigene Bussystem (21) angeschlossen ist.

Durch die Integration des Schienensystems in die stabile Bodenkonstruktion der Fahrgastzelle ist eine große potentielle Nutzlast zum Transport gegeben ohne Mehrgewicht zu verursachen.

Die Verriegelung des Schienensystems wird vorzugsweise so ausgestaltet, daß jede Profilschiene (9) einzeln ver- und entriegelt werden kann, denkbar ist weiterhin eine Ausführung einer durchgehenden Profilschiene mit mehreren Verriegelungssegmenten, so daß auch geladene Einzelgüter einzeln (automatisch) entladen werden können.

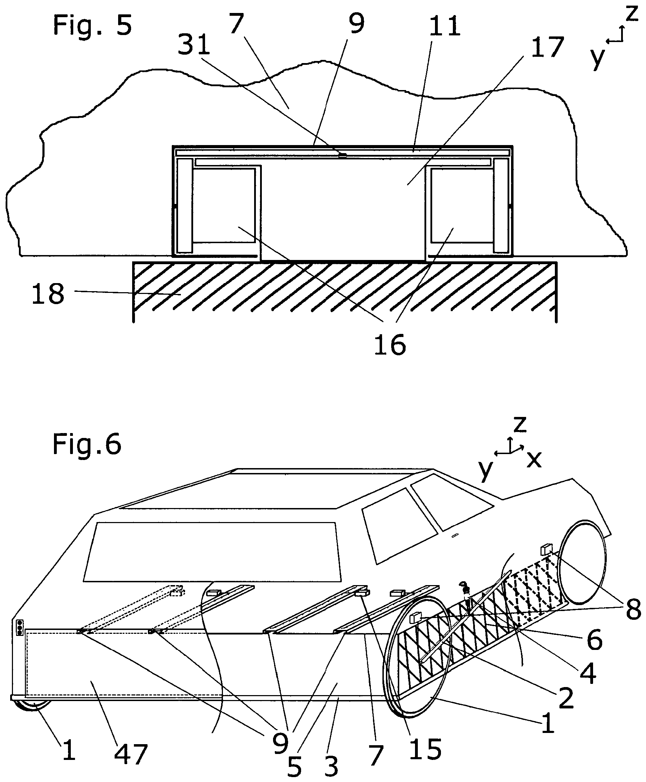

In Fig. 4 wird die grundlegende Funktionsweise der Verriegelung des Schienensystems dargestellt. Dabei wird durch Drehung des Exzenters (10) das in die Profilschiene (9) eingepaßte Flachmaterial (11) nach unten geschoben, wodurch eine Klemmverbindung mit den eingeführten Nutensteinen, den rollen- oder kugelgelagerten Aufhängesystemen oder, wie bei der in Fig. 5 dargestellten bevorzugten Ausgestaltung, mit den an die Profilschiene (9) fest montierten Laufrollen (16) und dem zwischen Flachmaterial (11) und Laufrollen (16) eingeführten Trägerprofil (17) hervorgerufen wird. Die Drehbewegung wird -vermittelt durch eine torsionssteife Exzenterwelle (12), die durch adäquat positionierte Lager (13) geführt wird- manuell mittels eines Hebels (14) oder elektrisch mittels eines an das fahrzeugeigene Bussystem (21) gekoppelten Stellmotors (15) induziert.

Alternativ kann die Klemmverbindung auch direkt durch in z-Richtung arbeitende Stellmotoren, die, oberhalb der Profilschiene (9) montiert, auf das Flachmaterial (11) wirken, hergestellt werden.

In Fig.4 und Fig. 5 ist zudem die elektrische Anbindung durch eine in das Flachmaterial (11) eingearbeitete Schnittstelle (31) angedeutet, die ebenso segmentweise sowohl Sensorinformationen als auch Stromzuführung bereitstellen kann.

Das Niveauregelsystem besteht in der bevorzugten Ausführung unter anderem aus Feder-Dämpfer-Einheiten (4), die ähnlich wie bei Side-by-Side-Buggies am Längslenker der Hinterachse (2) befestigt sind. Durch die große Länge der Längslenker (2) und den Hub dieser Feder-Dämpfer-Einheiten (4) ergibt sich der besonders große Gesamthub für das erfindungsgemäße System. Das Niveauregelsystem ist ebenfalls mit dem fahrzeugeigenen Bussystem (21) gekoppelt.

Das spezifische Zusammenwirken der Einzelkomponenten bzw. Subsysteme des erfindungsgemäßen Systems soll exemplarisch anhand des grundlegendsten 'Basisfalls' dargestellt werden, bei dem sich das Fahrzeug auf einer Höhe unterhalb von Hmax und der Laderaum (5) in eingefaltetem Zustand (Fig. 1) befindet und eine Beladung des Fahrzeugs ermöglicht werden soll.

Nach Eingabe des Befehls 'Ladezustand herstellen' -dies kann fakultativ über ein Bedienelement (24) am Armaturenbrett oder über eine Kommunikationsschnittstelle (25) via Smartphone oder Tablet (26) erfolgen- erfolgt zunächst die fahrzeuginterne Prüfung, ob das Fahrzeug steht. Dies geschieht mittels Abfrage der Sensorinformation Geschwindigkeit Fahrzeug (29). Wenn dies erfüllt ist, wird es mittels der Steuereinheit bzw. ECU des Niveauregelsystems (27) und der Feder-Dämpfer-Einheit (4) auf die maximale Höhe gebracht.

Parallel wird mit einer Geschwindigkeit, die maximal der realen vertikalen Hubgeschwindigkeit des Niveauregelsystems, also der Regelgeschwindigkeit des Systems, entspricht, der Laderaum (5) aufgefaltet.

Dies geschieht durch Ausfahren eines Kolbens am Stellmotor (8) des Scherengitters, der auf in Fig. 3 dargestellter Weise auf einen Schenkel des Scherengitters (6) wirkt, daß sich dieses entfaltet.

Anschließend wird mittels der Stellmotoren der Exzenterwelle (15) die Klemmvorrichtung des kompletten Schienensystems auf 'Entriegelt' gestellt, so daß Subsysteme jedweder Art eingeführt werden können.

Nach Einführen des Transportguts bzw. des Subsystems, das eine sichere Befestigung eines speziellen Transportguts ermöglichen soll, wird das Schienensystem wieder verriegelt.

Beim Drehen der Exzenterwelle (12) und somit der Exzenter (10) wird bei der Verriegelung das klemmende Flachmaterial (11) nach unten gedrückt, um in Verbindung mit dem Gleitstein oder den Kugeln oder den Laufrollen (16) mitsamt Trägerprofil (17) eine belastbare Klemmverbindung mit dem Flachmaterial (11) herzustellen.

Durch die Kopplung der Subsysteme an das fahrzeuginterne Bussystem (21) ist die Beladesituation des Fahrzeugs bekannt und kann zur Steuerung des Niveauregelsystems während der Fahrt genutzt werden, die sichere Verriegelung des Schienensystems wird durch entsprechende Sensorik Status Verriegelung Schiene (28) überwacht. Außerdem besteht die Möglichkeit, Schnittstellen zu den zu ladenden Boxen (31) einzurichten und zu aktivieren, über die bspw. bei temperierten Boxen Temperaturdaten an eine Anzeigeeinrichtung im Fahrzeuginnenraum (23) gesendet werden können.

### Anwenderszenarien

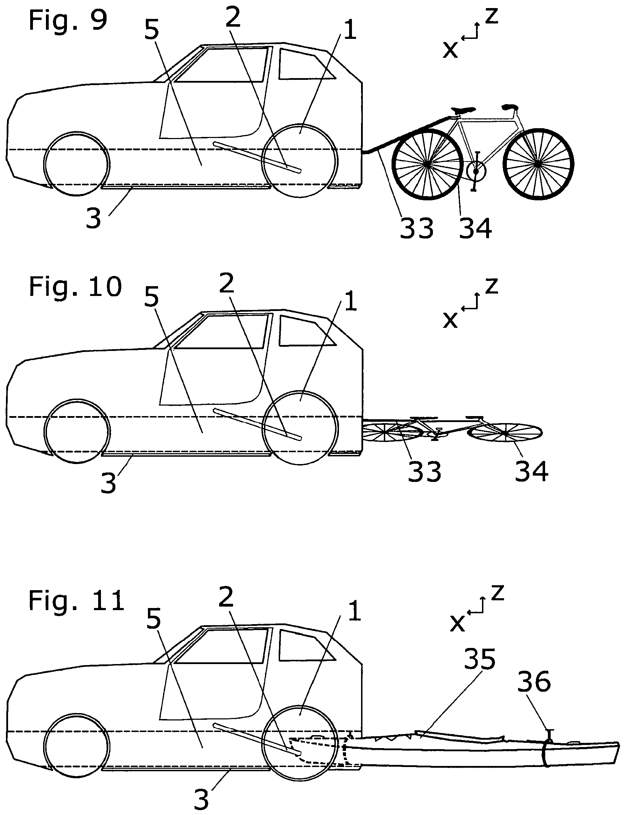

Nach Herstellung des Beladezustands und Anbringen eines Fahrradhalters (33), der schienenseitig mittels einer gleitsteingeführten Aufnahme oder bei fest montierten Laufrollen mittels eines Trägerprofils (17) befestigt wird und neben einem Schwenkarm auch ein Drehgelenk konstruktiv beinhaltet, wird das Fahrrad (34) auf die in Fig. 9 dargestellte Weise hinter das Fahrzeug gestellt. Nach Festklemmen des Schwenkarms des Fahrradhalters (33) an bspw. die Sattelstütze kann das Fahrrad (34) bequem gehoben und gedreht werden, bis es, wie in Fig. 10 gezeigt, in den aufgefalteten Laderaum (5) eingeschoben werden kann.

Nach Herstellung des Beladezustands wird das Fahrzeug mit der vorderen Kajakhalterung ausgestattet und das Kajak (35) wie in Fig. 11 skizziert mit angebrachter hinterer Kajakhalterung (36) mit Gleitsteinen oder Trägerprofil (17) eingeschoben.

Analog zu den o.g. Anwendungsfällen sind derartige Fälle mit sperrigen Einzelgütern wie mit Surf- bzw. Kiteausrüstung, Musikinstrumenten, Architekturmodellen, Leitern etc. denkbar.

Bei einem Anwendungsfall 'Drop-Box' kann nach Lokalisierung des Fahrzeugs durch die für den KEP-Dienstleister freigeschalteten GPS-Ortung, welche über das zentrale Steuergerät (22) des Fahrzeugs erfolgt, dieser mittels seines Kurier-Terminals/Tablets (26) über die Kommunikationsschnittstelle des Fahrzeugs (25) die Authorisierung erhalten, bspw. ein Paket in den Laderaum (5) abzulegen. Nach Authorisierung bringt sich das Fahrzeug mittels einer programmierten Routine selbstständig in den Zustand der Beladebereitschaft mit entfaltetem Laderaum (5) und steuert die Verriegelung Heckklappenschloß (30) an. Nach Öffnen der Heckklappe (47), Einstellen des Pakets und Schließen der Heckklappe (47) verbleibt das Fahrzeug in hochgestelltem Zustand und kann über seine Kommunikationsschnittstelle (25) den Empfänger des Pakets (der auch der Halter des Fahrzeugs sein kann) über die Annahme des Pakets informieren. Wenn in einem zu definierenden Nutzungsfall als kurzfristiges Paketdepot die Paketannahme auch für Nichtfahrer des Fahrzeugs ermöglicht wird, kann der Paketempfänger auch über den gleichen Vorgang wie der KEP-Dienstleister Zugang zum Laderaum gewährt werden, um das gelieferte Paket wieder zu entnehmen.

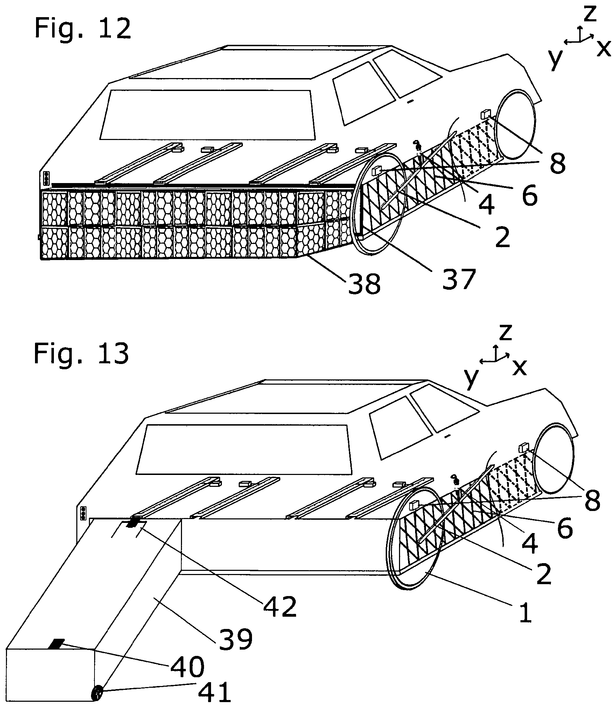

Zur Nutzung des erfindungsgemäßen Fahrzeugs als praktikablen Baustein für stadtlogistische Anwendungen kann nach Herstellung der Beladebereitschaft ein Subrahmen (37) in das Schienensystem eingeführt werden, der die Aufnahme größerer, aggregierter und aneinander fixierter stadtlogistischer Einheiten -also einem Package mehrerer Standardcontainer (38)- ermöglicht, beispielsweise in der Art des für ein zu realisierendes Physical Internet entwickelten Container des Modulushca-Projekts. Fig. 12 illustriert einen derartigen Beladungsfall. Auf diese Weise ist eine sehr schnelle und unkomplizierte 'Mitnahme' von Container-Packages einfach realisierbar.

In Fig. 13 wird ein Anwendungsszenario skizziert, das die Nutzung des erfindungsgemäßen Fahrzeugs zum Transport eines 'Trolley-art-Containers' (39) darstellt, welcher neben der zum Schienensystem passenden Trolley-Halterung (40) auch Räder (41) und einen herausziehbaren Bügel (42) aufweist. Mit diesem ist zum Einen ein sicherer Transport von bspw. Einkaufsgütern im Fahrzeug gewährleistet als auch ein ergonomisch nutzbarer Trolley zum Transport von Waren außerhalb des Fahrzeugs. Weiterhin ist ein Anwendungsfall denkbar, in dem der schwerere, unhandliche Teil eines Einkaufs für den Kunden bequem ins Auto geliefert wird -mit den o.g. Vorteilen des Systems in Bezug auf Privatsphäre- und dieser zusätzlich bequem entladen kann.

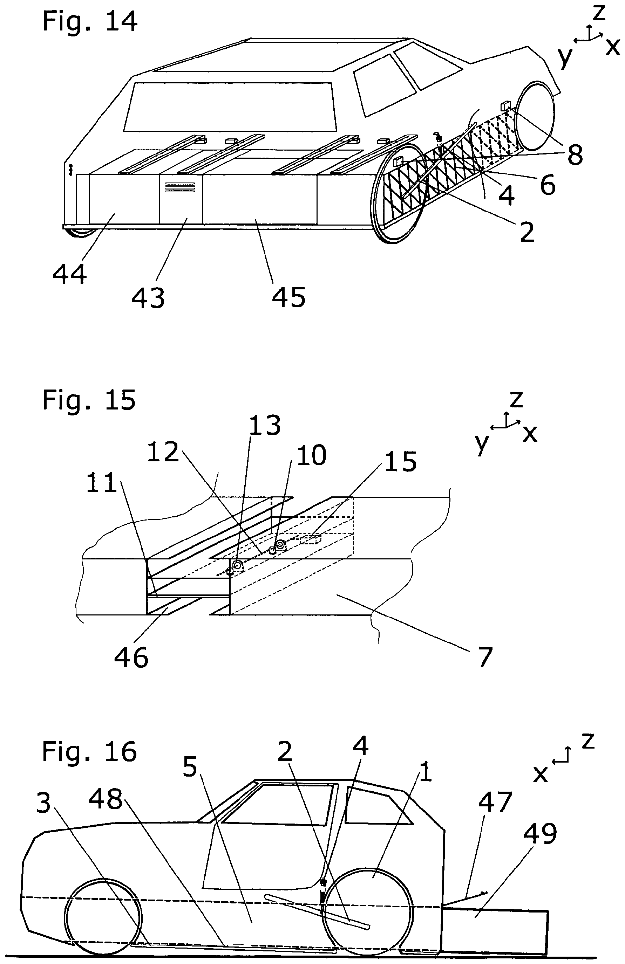

In Fig. 14 wird ein Szenario dargestellt, das bspw. bei Nutzung durch Lieferdienste, die zu temperierende Güter transportieren, Vorteile bietet. Durch Einbringen eines Kühlaggregats (43), welches gleichzeitig auch Heizfunktionen beinhaltet, kann der Laderaum sowohl mit heizbaren Containern (44) als auch mit kühlbaren Containern (45) bestückt werden. Neben dem Mehrwert in Punkto Nutzungsszenarien ergeben sich so auch Potentiale zur Energieeinsparung.

In Fig. 15 wird eine zum Fahrzeuginnenraum erweiterte, mit einer zusätzlichen Aufnahme versehene Doppelprofilschiene (46) dargestellt, die neben der Funktionalität des erfindungsgemäßen Schienensystems mit nach unten weisender Schiene und Verriegelungsfunktionalität mittels Flachmaterial (11), Exzenter (10), Exzenterwelle (12) samt Lager (13) und Stellmotor (15) für diese noch eine Schienenaufnahme für im Fahrzeuginnenraum zu befestigendes 'Mobiliar' aufweist. Mittels einer derartigen Doppelprofilschiene (46) kann sowohl der Materialeinsatz als auch der konstruktive Aufwand für das Fahrzeug minimiert werden, zudem ist eine Einbindung konstruktiver Aufgaben in Bezug auf Stabilität der Fahrzeugzelle naheliegend.

Containerelemente, die mit speziellen Gleitsteinen mit niedrigem Reibbeiwert oder besser mit kugel- oder rollengelagerten Aufhängungssystemen ausgestattet sind, können mit Hilfe des erfindungsgemäßen Systems auch automatisch entladen werden.
Dies wird bewerkstelligt, indem die Verriegelung Heckklappenschloß (30) geöffnet wird, nur die Hinterachse mittels der ECU des Niveauregelsystems (27) bis zum Erreichen einer Schrägstellung des Fahrzeugs mit dem Winkel α abgesenkt wird und das Schienenverriegelungssystem geöffnet wird. Durch die Neigung des Fahrzeugkörpers kann nun der Container (49) mittels Schwerkraft nach außen gleiten bzw. rollen, die Heckklappe (47) wird vom Container (49) aufgestoßen.

### Kurzbeschreibung der Figuren:

Das grundsätzliche Zusammenwirken der einzelnen Subsysteme wird anhand der Zeichnungen klar.
Fig.1 stellt das Auto mit eingefaltetem Gepäckraum dar, die Längslenker der Hinterachse (2) befinden sich in einer Stellung, die den Aufbau des Kfz in einer bodennahen Höhe hält, die Unterschale (3) liegt am Fahrzeugunterboden an.
In Fig. 2 ist das Kfz mittels der ECU des Niveauregelsystems (27) und Feder-Dämpfer-Einheit (4) in eine maximale Höhenstellung gebracht, der Längslenker (2) hat dementsprechend seine Neigung geändert. Der Laderaum (5) wurde aufgefaltet und nimmt den Raum zwischen den beiden gestrichelten Linien ein.
Fig. 3 zeigt das Scherengittersystem bei aufgefaltetem Laderaum (5) mit den Komponenten Scherengitter (6) und Stellmotor Scherengitter (8), seine Befestigung am Fahrzeugunterboden (7) und den Abschluss des Laderaums nach unten mittels der Unterschale (3).
Fig. 4. zeigt den schematischen Aufbau des Ver- und Entriegelungsmechanismus der Schienen. Die grundlegende technische Gestaltung eines Schienensystem ist bekannt, es wird die technische Auslegung insofern modifiziert, als die Anbringung der Lasten hängend erfolgt. Desweiteren wird der Mechanismus zur Ver- und Entriegelung so gestaltet, daß sowohl eine manuelle als auch eine elektromechanische Ver- und Entriegelung möglich ist.
Fig. 5 zeigt die Frontalansicht einer Profilschiene (6) mit fest eingebauten Laufrollen (16) und einschiebbarem, die Lasten aufnehmendem Trägerprofil (17).
Fig. 6 zeigt das Kfz von schräg hinten mit den beteiligten Subsystemen im Zustand mit aufgefaltetem Laderaum (5).
   Aus dieser Darstellung ist die Anordnung der Profilschienen (9) mit Stellmotor Exzenterwelle (15) zur Ver- und Entriegelung erkennbar sowie das Scherengitter (6) und dessen Stellmotoren (8), die die Ent- und Einfaltung des Laderaums verantworten.

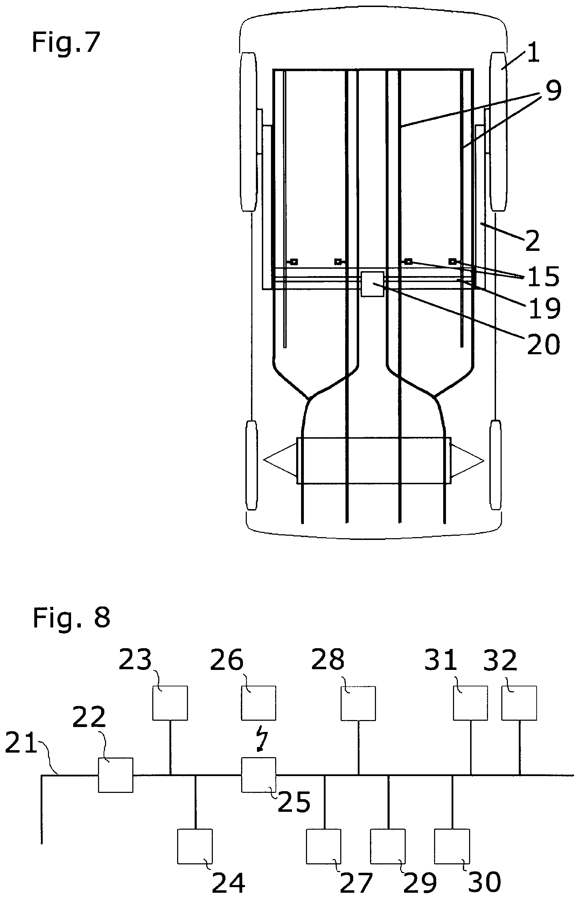

Fig. 7 zeigt den schematischen Aufbau des Fahrzeugs von unten, erkennbar ist neben dem Verlauf der Schienen bei maximaler Länge auch die Anordnung des das Fahrzeug antreibenden Elektromotors (16) und der Antriebswellen (15).
Fig. 8 zeigt den schematischen Überblick über die eingebundenen Elektronikkomponenten am fahrzeugeigenen Bussystem (21).
Fig. 9 und Fig. 10 zeigen schematisch den Fall einer Beladung mit einem Fahrrad (34).
Fig. 11 zeigt schematisch den Fall einer Beladung mit einem Kajak (35).
Fig. 12 zeigt schematisch den Fall einer Beladung mit einem mittels Physical Internet-Boxen zusammengestellten Pakets mehrerer Standardcontainer (38).
Fig. 13 zeigt schematisch den Fall einer Beladung mit einem als Einkaufstrolley zu nutzenden Trolleyart-Container (39).
Fig. 14 zeigt schematisch den Fall von getrennten Containern für Heiz-(44) und Kühlseite (45) innerhalb des Laderaums (5).
Fig. 15 zeigt schematisch eine konstruktive Variante mit zusätzlichem Profil zur Befestigung von 'Mobiliar' im Fahrzeuginnenraum als Doppelprofilschiene (46).
Fig. 16 zeigt schematisch den Fall der automatischen Entladung eines Containers (49).

### Bezugszeichenliste

- 1 -: Hinterrad
- 2 -: Längslenker der Hinterachse
- 3 -: Unterschale
- 4 -: Feder-Dämpfer-Einheit
- 5 -: (auffaltbarer) Laderaum
- 6 -: Scherengitter
- 7 -: Fahrzeugunterboden
- 8 -: Stellmotor Scherengitter
- 9 -: Profilschiene
- 10 -: Exzenter
- 11 -: Flachmaterial
- 12 -: Exzenterwelle torsionssteif
- 13 -: Lager Exzenterwelle
- 14 -: Hebel für manuelle Betätigung
- 15 -: Stellmotor Exzenterwelle
- 16 -: Laufrolle
- 17 -: Trägerprofil
- 18 -: Transportgut
- 19 -: Antriebswelle
- 20 -: Elektromotor
- 21 -: Bussystem
- 22 -: ECU - zentrales Steuergerät
- 23 -: Anzeigeeinrichtung Fahrzeuginnenraum
- 24 -: Bedienelement Fahrzeuginnenraum
- 25 -: Kommunikationsschnittstelle
- 26 -: Smartphone / Tablet / KEP-Terminal
- 27 -: ECU Niveauregelsystem
- 28 -: Status Verriegelung Schiene
- 29 -: Sensorinformation Geschwindigkeit Fahrzeug
- 30 -: Verriegelung Heckklappenschloß
- 31 -: Schnittstelle Box 1
- 32 -: Schnittstelle Box 2
- 33 -: schwenk- und ausziehbare Halteeinheit Fahrrad
- 34 -: Fahrrad
- 35 -: Kajak
- 36 -: Kajakhalterung mit Gleitsteinen
- 37 -: Subrahmen
- 38 -: Package mehrerer Standardcontainer
- 39 -: Trolleyart-Container
- 40 -: Trolley-Halterung
- 41 -: Rad für Trolleyart-Container
- 42 -: Bügel herausziehbar
- 43 -: Kühlaggregat
- 44 -: heizbare Container
- 45 -: kühlbare Container
- 46 -: Doppelprofilschiene
- 47 -: Heckklappe
- 48 -: Winkel α
- 49 -: Container

## Patentansprüche

1. Fahrzeug, insbesondere Kraftfahrzeug mit elektrischem oder hybridelektrischem Antrieb, mit einer Vorrichtung zum Tragen, Aufnehmen und Entladen von Lasten und Gütern unterhalb der Fahrgastzelle, wobei die Vorrichtung aus einem lastenaufnehmenden Schienensystem besteht, das im Fahrzeugunterboden (7) integriert ist, eine Hinterachse vom Typ Längslenkerachse oder Verbundlenkerachse enthält, deren Haltepunkt sich seitlich am Fahrzeugunterboden (7) oder am seitlichen Rand des Fahrzeugunterbodens (7) befindet, **dadurch gekennzeichnet dass** die Vorrichtung ein Niveauregelsystem aufweist, welches den Fahrzeugaufbau in eine systemseitig festgelegte Höhe relativ zur Fahrbahnoberfläche bewegt, und dass die Vorrichtung aus einem auffaltbaren Laderaum (5) zum Tragen, Aufnehmen und Entladen von Lasten und Gütern besteht, der am Fahrzeugunterboden (7) fest angeordnet ist.

2. Fahrzeug nach Anspruch 1 **dadurch gekennzeichnet, dass** das Schienensystem entlang der Längsachse des Fahrzeugs ausgerichtet ist.

3. Fahrzeug nach Anspruch 1 **dadurch gekennzeichnet, dass** das Schienensystem mindestens eine Profilschiene (9) beinhaltet zur verschieblichen Aufnahme, Lagerung und Entladung eines mit dem wenigstens einen Einzelgut oder wenigstens einen aufnehmenden Subsystem verbundenen oder verbindbaren Nutensteins oder kugel- oder rollengelagerten Schienenläufers.

4. Fahrzeug nach Anspruch 1 **dadurch gekennzeichnet, dass** das Schienensystem in Bezug auf seine Länge variabel ist.

5. Fahrzeug nach Anspruch 1 **dadurch gekennzeichnet, dass** bei Vorliegen mehrerer Profilschienen (9) im Rahmen des Schienensystems diese achsparallel angeordnet sind.

6. Fahrzeug nach Anspruch 1 **dadurch gekennzeichnet, dass** das Schienensystem über eine integrierte Verriegelungs- bzw. Verklemmungsfunktionalität verfügt, wobei 6.1. die Verriegelungs- bzw. Verklemmungsfunktionalität mechanisch als auch elektromechanisch ver- und entriegelbar ist,
6.2. die Verriegelungs- bzw. Verklemmungsfunktionalität strukturell so gestaltet ist, daß sie für jede Schiene in mindestens ein Teilsegment aufgeteilt ist, welches separate Ver- und Entriegelung jedes Teilsegments erlaubt,
6.3. die Verriegelungs- bzw. Verklemmungsfunktionalität sensorischer- und aktorischerseitig teilsegmentweise an das fahrzeugeigene Bussystem (21) angebunden ist und
6.4. die Verriegelungs- bzw. Verklemmungsfunktionalität dergestalt ausgebildet ist, daß sie sowohl vom Fahrzeuginnenraum über ein entsprechendes Bedienelement (24) als auch über die Kommunikationsschnittstelle (25) von außerhalb des Wagens zu betätigen ist.

7. Fahrzeug nach Anspruch 1 **dadurch gekennzeichnet, dass** das Schienensystem zur Aufnahme mehrerer, jeweils mit eigenen, nutstein-, rollen- oder kugelgelagerten Aufhängesystemen versehener, Einzelgüter ausgebildet ist.

8. Fahrzeug nach Anspruch 1 **dadurch gekennzeichnet, dass** das Schienensystem zur Aufnahme verschiedener Subsysteme ausgebildet ist, welche jeweils spezifische Transportfunktionalitäten für ein oder mehrere große Einzelgüter ohne Aufhängesysteme bereitstellen.

9. Fahrzeug nach Anspruch 1 **dadurch gekennzeichnet, dass** das Schienensystem zur Aufnahme verschiedener Subsysteme ausgebildet ist, welche aggregierte Containerpakete oder andere normierte Verpackungseinheiten schnell aufnehmen und entladen können.

10. Fahrzeug nach Anspruch 1 **dadurch gekennzeichnet, dass** in das Schienensystem eine Fördereinrichtung zur erleichterten Beladung integrierbar ist.

11. Fahrzeug nach Anspruch 1 **dadurch gekennzeichnet, dass** das Schienensystem dergestalt ausgebildet ist, daß eine entsprechend erweiterte Doppelprofilschiene (46) sowohl am Fahrzeugunterboden (7) die Vorrichtung nach den Ansprüchen 1-9 bereitstellt als auch zum Fahrzeuginnenraum eine Schienenaufnahme für Konsolen oder Einbauvorrichtungen bekannter Art aufweist.

12. Fahrzeug nach Anspruch 1 **dadurch gekennzeichnet, dass** das Niveauregelsystem die festgelegte Höhe selbständig regulierend halten kann.

13. Fahrzeug nach Anspruch 1 **dadurch gekennzeichnet, dass** das Niveauregelsystem an das fahrzeugeigene Bussystem (21) dergestalt angebunden ist, daß eine Höhenänderung sowohl vom Bedienelement im Fahrzeuginnenraum (24) des Fahrzeugs als auch über die Kommunikationsschnittstelle (25) von außen ermöglicht wird.

14. Fahrzeug nach Anspruch 1 **dadurch gekennzeichnet, dass** das Niveauregelsystem an das fahrzeugeigene Bussystem (21) dergestalt angebunden ist, daß eine Winkeländerung um einen Winkel α (48) in Bezug auf die Längsachse des Fahrzeugs durch entsprechendes Absenken der Hinterachse ermöglicht wird und das Absenken der Hinterachse im genannten Bereich sowohl im Stand als auch bei einer zu definierenden Schrittgeschwindigkeit möglich ist.

15. Fahrzeug nach Anspruch 1 **dadurch gekennzeichnet, dass** die Auffaltungsfunktionalität des auffaltbaren Laderaums (5) mittels eines Scherengittersystems ausgeführt ist, dessen Steuerung an das fahrzeugeigene Bussystem (21) angebunden ist und der auffaltbare Laderaum (5) nach unten durch eine Unterschale (3) und nach außen durch ein außerhalb des Scherengitters (6) befindliches, aufrollbares oder faltbares Material blickdicht abgeschlossen wird.

## Claims

1. Vehicle, in particular motor vehicle with electric or hybrid electric drive, with a device for carrying, receiving and unloading loads and goods below the passenger compartment, said device including a load-bearing rail system that is integrated in the vehicle underbody (7), a rear axle of the trailing arm type or twist-beam rear suspension type, whose holding point is located on the side of the vehicle underbody (7) or on the lateral edge of the vehicle underbody (7), **characterized in that** the device includes a self-levelling suspension system, which moves the vehicle body to a height relative to the road surface defined by the system, and that the device further includes a foldable load compartment (5) for carrying, receiving and unloading loads and goods, which is firmly attached to the vehicle underbody (7).

2. Vehicle according to claim 1, **characterised in that** the rail system is aligned along the longitudinal axis of the vehicle.

3. Vehicle according to claim 1, **characterised in that** the rail system includes at least one profile rail (9) for slidably receiving, storing and unloading a sliding block or ball or roller-mounted rail runner that is connected or connectable to the at least one individual item or to at least one receiving subsystem.

4. Vehicle according to claim 1, **characterised in that** the rail system is variable with respect to its length.

5. Vehicle according to claim 1, **characterised in that** in the case of multiple profile rails (9) in the frame of the rail system, these are arranged axially parallel.

6. Vehicle according to claim 1, **characterised in that** the rail system has an integrated locking or clamping function, where
6.1 the locking or clamping function can be locked and unlocked both mechanically and electromechanically,
6.2 the locking or clamping function is structurally designed in such a way that it is divided into at least one subsegment for each rail, which allows each subsegment to be locked and unlocked separately,
6.3 the locking or clamping function is connected to the vehicle's bus system (21) in segments as regards both the sensor side and the actuator side and
6.4 the locking or clamping function is designed in such a way that it can be operated both from the vehicle interior via a corresponding control element (24) and via the communication interface (25) from outside the vehicle.

7. Vehicle according to claim 1, **characterised in that** the rail system is designed to accommodate multiple individual goods, each with its own, sliding block-, roller- or ball-bearing suspension system.

8. Vehicle according to claim 1, **characterised in that** the rail system is designed to accommodate different subsystems, each of which providing specific transport functions for one or multiple large individual goods without suspension system,

9. Vehicle according to claim 1, **characterised in that** the rail system is designed to accommodate different subsystems which can quickly receive and unload aggregated container packages or other standardized packaging units.

10. Vehicle according to claim 1, **characterised in that** a conveying device for easier loading can be integrated into the rail system.

11. Vehicle according to claim 1, **characterised in that** the rail system is designed in such a way that a correspondingly expanded double profile rail (46) both provides the device according to claims 1―9 on the vehicle underbody (7) and comprises a rail mount for prior art consoles or fittings towards the vehicle interior.

12. Vehicle according to claim 1, **characterised in that** the self-levelling suspension system can keep the specified height in an independently regulating way.

13. Vehicle according to claim 1, **characterised in that** the self-levelling suspension system is connected to the vehicle's bus system (21) in such a way that a change in height can be initiated both via the control element in the vehicle interior (24) and via the communication interface (25) from outside.

14. Vehicle according to claim 1, **characterised in that** the self-levelling suspension system is connected to the vehicle's bus system (21) in such a way that an angle change by an angle α (48) relative to the longitudinal axis of the vehicle is enabled by correspondingly lowering the rear axle, and the lowering of the rear axle is possible in the specified range both when stationary and at a walking speed that is to be defined.

15. Vehicle according to claim 1, **characterised in that** the folding-up function of the foldable load compartment (5) is carried out by means of a scissor grid system, whose controller is connected to the vehicle's bus system (21), and where the underside of the foldable load compartment (5) is formed by a lower shell (3) and where the load compartment is closed off from the outside by a rollable or foldable, non-transparent material on the outside of the scissor grid (6).

## Revendications

1. Véhicule, en particulier véhicule à moteur électrique ou à traction électrique hybride, avec un dispositif servant à porter, à recevoir et à décharger des charges et des biens sous l'habitacle, le dispositif étant constitué d'un système de rails intégré dans le dessous de caisse du véhicule (7) pour recevoir les charges, d'un essieu arrière de type essieu à bras longitudinaux ou essieu à bras longitudinaux combinés fixés sur le côté du dessous de caisse du véhicule (7) ou sur le bord latéral du dessous de caisse du véhicule (7), **caractérisé en ce que** le dispositif possède un système de régulation de niveau qui déplace la carrosserie du véhicule jusqu'à une hauteur définie dans le système par rapport à la surface de la chaussée, et **en ce que** le dispositif est constitué d'un espace de chargement dépliable (5) ayant un emplacement fixe sur le dessous de caisse du véhicule (7), pour porter, recevoir et décharger des charges et des biens.

2. Véhicule selon la revendication 1, **caractérisé en ce que** le système de rails est placé dans l'axe longitudinal du véhicule.

3. Véhicule selon la revendication 1, **caractérisé en ce que** le système de rails comprend au moins un rail profilé (9) pour la réception, l'entreposage et le déchargement coulissants d'un coulisseau rainuré ou d'un chariot à roulements à billes ou à rouleaux, relié ou pouvant être relié à au moins un bien individuel ou à au moins un sous-système devant être chargé.

4. Véhicule selon la revendication 1, **caractérisé en ce que** le système de rails est de longueur variable.

5. Véhicule selon la revendication 1, **caractérisé en ce que**, si plusieurs rails profilés (9) sont présents dans le châssis du système de rails, les axes de ceux-ci sont disposés parallèlement.

6. Véhicule selon la revendication 1, **caractérisé en ce que** le système de rails possède une fonction intégrée de verrouillage et de serrage,
6.1. la fonction de verrouillage et de serrage permettant un verrouillage et un déverrouillage aussi bien mécaniques qu'électromécaniques,
6.2. la structure de la fonction de verrouillage et de serrage étant conçue de manière à être divisée en au moins un sous-segment pour chaque rail pour permettre le verrouillage et le déverrouillage séparés de chaque sous-segment,
6.3. les capteurs et les actionneurs de la fonction de verrouillage et de serrage étant connectés au système de bus (21) du véhicule séparément pour chaque sous-segment et
6.4. la fonction de verrouillage et de serrage étant conçue de manière à pouvoir être actionnée aussi bien depuis l'intérieur du véhicule, avec un élément de commande (24) correspondant, que depuis l'extérieur de la voiture, par l'interface de communication (25).

7. Véhicule selon la revendication 1, **caractérisé en ce que** le système de rails est conçu pour recevoir plusieurs biens individuels équipés chacun de systèmes de suspension à coulisseaux rainurés ou à roulements à billes ou à rouleaux.

8. Véhicule selon la revendication 1, **caractérisé en ce que** le système de rails est conçu pour recevoir différents sous-systèmes remplissant chacun des fonctions de transport spécifiques pour un ou plusieurs biens individuels de grande taille sans systèmes de suspension.

9. Véhicule selon la revendication 1, **caractérisé en ce que** le système de rails est conçu pour recevoir différents sous-systèmes pouvant recevoir et décharger rapidement des colis de conteneurs groupés ou d'autres unités d'emballage normalisées.

10. Véhicule selon la revendication 1, **caractérisé en ce qu'**un dispositif de manutention peut être intégré dans le système de rails pour faciliter le chargement.

11. Véhicule selon la revendication 1, **caractérisé en ce que** le système de rails est conçu de sorte qu'un rail profilé double (46) étendu de manière adéquate permet de mettre le dispositif à disposition sur le dessous de caisse du véhicule (7) selon les revendications 1 à 9 d'une part, et comporte, d'autre part, vers l'intérieur du véhicule, un rail de fixation pour des consoles ou des dispositifs de montage connus.

12. Véhicule selon la revendication 1, **caractérisé en ce que** le système de régulation de niveau est en mesure de régler et de maintenir automatiquement la hauteur définie.

13. Véhicule selon la revendication 1, **caractérisé en ce que** le système de régulation de niveau est connecté au système de bus (21) du véhicule de sorte que la hauteur puisse être modifiée aussi bien depuis l'intérieur du véhicule, avec l'élément de commande situé à l'intérieur du véhicule (24), que depuis l'extérieur, par l'interface de communication (25).

14. Véhicule selon la revendication 1, **caractérisé en ce que** le système de régulation de niveau est connecté au système de bus (21) du véhicule de sorte que l'angle puisse être modifié de l'angle α (48) par rapport à l'axe longitudinal du véhicule par abaissement de l'essieu arrière, et que l'abaissement de l'essieu arrière soit possible dans la plage indiquée, aussi bien à l'arrêt qu'à une vitesse réduite à définir.

15. Véhicule selon la revendication 1, **caractérisé en ce que** la fonction de dépliage de l'espace de chargement dépliable (5) est réalisée par un système à grille accordéon dont la commande est connectée au système de bus (21) du véhicule, et **en ce que** l'espace de chargement dépliable (5) est fermé vers le bas par une coque inférieure (3) et, vers l'extérieur, par un matériau opaque enroulable ou pliable placé à l'extérieur de la grille accordéon (6).
